# EUROPEAN PATENT APPLICATION

(11) **EP 2 980 634 A1**
(43) Date of publication of application: **03.02.2016**
(21) Application number: 14772758.0
(22) Date of filing: 26.03.2014
(51) Int. Cl.: G02F 1/01, G02F 1/15, G02F 1/153

(54) **ELECTROCHROMIC DEVICE USED AS ELECTROCHROMIC WINDOW OR PIXEL AND USE OF SAID DEVICE**

(30) Priority: 27.03.2013 BR 102013007194
(71) Applicant: Universidade de São Paulo - USP, 05508-050 São Paulo - SP (BR); Wojskowy Instytut Techniki Inzynieryjnej, 50961 Wroclaw (PL)
(72) Inventor: MAULE, Agnieszka Joanna Pawlicka, 13571800 - São Carlos (BR); ASSIS, Lucas Marinho Nóbrega, 13564330 - São Carlos (BR); JANUSZKO, Adam Walerian, 50521 WROCLAW (PL)
(74) Representative: Eupatent.pl
(86) International application number: PCT/BR2014/000098
(87) International publication number: WO 2014/153634

(57) **Abstract**

The present invention relates to an electrochromic device (ECD), which has a structure of five types of layers: substrate (1), electronic driver (2), primary electrochromic layer (3), ion conductor (4) and an ions storage layer and/or complementary electrochromic (5). The invention still contemplates the use of this device.

The electrochromic device preferably has two main colors: green and yellow, depending on the combination of colors seen through the layers. The present invention contemplates two types of application of the electrochromic device, the first type consists of a single pixel, as part of many pixels, and the second type is a single device such as electrochromic window.

## Description

### FIELD OF THE INVENTION

The present invention falls within the scope of Chemistry and Electronics, and more specifically electrochromics since it is relates to an electrochromic device that can be applied in two modes: as electrochromic window or as a pixel.

### DESCRIPTION OF ART

### Electrochromism and Electrochromic Devices

Chromogenic materials that change their color have attracted attention in recent decades due to their possible application related to the light transmission.

They represent a family of compounds that change the level of transmission, absorption or reflection of light and thus its color depending on the applied light intensity (photochromic), temperature (thermochromic), pressure (barochromic), and electric potential (electrochromic). Using these materials, it is possible to build several devices depending on the desired application. Among the electrochromic materials used for electrochromic devices assembly, it can be mentioned thin films of tungsten oxide or niobium, which change color from transparent to blue, cobalt oxide which changes the color from green to brown, manganese oxide from yellow to brown, N-ethyl-carbazole (green), polyani1ine (PANI; yellow, green, blue), etc.

Although there are many electrochromic materials, the predominant color of them is blue, and few materials with other colors. Because of this, the research towards the development of new materials with electrochromic properties continues to be a particularly active area of research, since these materials can be used in various modern business applications as vehicles, airplanes, architecture or various displays, and even military camouflage, as is being proposed by the invention.

The electrochromic devices (ECDs) are electrochemical systems that show the property of the color change when a voltage or current is applied through them. The color changes must be reversible when the polarity of the voltage or current is reversed. This type of device has many applications especially in efficient use of energy by control of light or heat passing through the transparent surfaces of buildings, cars, trains, airplanes etc., and it is already being used in automotive mirrors.

The electrochromic devices can have many configurations using layers of different materials or compositions and prepared by various deposition techniques.

### Camouflage

In nature, the camouflage system happens as a protection mechanism and/or protection for the animals, for example, the chameleon or octopus exchange the standard passive to adaptive camouflage. Camouflage now known, is passive, for example, in the case of the army, it is based on the color of the uniforms and equipment adaptated to the environment where the military exercise is run, which means that the colors and patterns are not changing.

### Documents belonging to the State of the Art

There are articles in the literature about electrochromic devices, which can change color as a result of applied potential or current. Depending on the type of electrochromic material, which may be inorganic or organic such color change can vary.

Although there are publications on the electrochromic devices, yet there are not many available practical applications, mainly due to complex manufacturing processes, resulting in very high price, accessible only to exclusive high-tech products.

However, since the electrochromic devices has their transmission, absorption and/or reflectance controllable they are systems of considerable commercial interest and therefore remain intensely researched.

Its use can be as windows of large area or small area or as windows of pixel type for use in displays. For now, the main application of these devices is as anti-glare rearview mirrors for cars, and there are some attempts of their application in windows that can regulate solar energy as light and heat entering the buildings, automobiles, and/or airplanes.

Another advantage of electrochromic devices is the memory effect, which means that after obtaining the color or withdrawal due to the application of suitable potential it can be turned off, resulting in permanent color (or transparency) and/or their slow discoloration (coloring) (depending on this memory time), which is interesting for energy saving spends in buildings with cooling/heating systems and/or darkening of transparent surfaces (windows).

The electrochromic device described in US patent 2009/0168140A1 claims electrochromic material polyaniline (PANI) and inorganic material manufactured Prussian blue as the photonic crystal structure allocated on the first electrode layer. The monolayer of electrochromic material has a plurality of spherical holes in it. When the monolayer of electrochromic material is formed with the photonic crystal structure, the monolayer array of color may change from red to the three primary colors RGB (red, green and blue).

The US2010/0233356A1 discloses an ECD preparation method including Prussian blue (PB) with nanodispersed composition, which can be obtained by dispersing the insoluble pigment Prussian blue in organic solvent using a dispersing agent and binder resin. As a result, a nanodispersed PB is deposited by wetting on the substrate including the transparent coating layer to form the ion reservoir layer. The wetting by deposition method is done using spin-coating, dip-coating, bar-coating, spray-coating, flow-coating, capillary-coating, roll-coating, screen printing, etc. The method can be applied for deposition of large areas and large-scale production as simplified and improved productivity.

The PI0618600 discloses an electrochemical system, an electrochemical window, and a process of manufacturing an electrochemical device and use of a glass pane. The electrochromic device discussed in this document has a lacquer layer and a barrier layer.

### Resolved Technical Issues and the Invention Advantages

Regarding the construction of electrochromic devices so far, there are no reports of obtaining the green color by color subtraction. All other articles and patents describe on obtaintion of the green color through different electrochromic molecules and/or assembling of double or triple electrochromic device.

The present invention shows the new method of subtractive mixture of colors to build a green color that change to yellow or vice versa, in real time through electrochromic window or pixel for adaptive/active camouflage purposes.

The present invention provides a new type of electrochromic device and its possible applications. The invention encompasses two areas of innovation: the construction/assembly of electrochromic device, which by subtracting colors changes the green color, through the variety of its color, to yellow, and its application to adaptive camouflage. The innovation is to obtain a new electrochromic device and its use for the modulation of colors that can be applied not only for camouflage, but also for all other applications where the green and/or yellow colors are used as an example, in sub pixels of the display type/display devices.

To date there is no report on the use of electrochromic devices for military adaptive camouflage in the visible spectrum range. In 2011 BEA System Company introduced the first adaptive camouflage, but only for the thermal region, or infrared radiation of the electromagnetic spectrum, allowing to change a military object image to a civil object. The electrochromic device with real-time color change for application, for example, for camouflage was developed using the subtractive method of mixing two colors. The device preferably has two main colors: green and yellow. The observed green color is the result of subtractive color mixing effect from electrochromic materials that have or acquire a blue color and a yellow, permanent colored electrolyte with or without a dye of yellow hue. In the absence of any dye or presence of dye with yellow hue, and depending on the applied potential to the device, change of color occurs from or to yellow when the electrochromic layer is transparent, and to dark green coloration when the electrochromic material is or acquires the blue color (example: the thin film of WO3 is transparent and passes into the blue on cathodic process, the thin film PB is blue and goes to transparent at the cathodic process).

### BRIEF DESCRIPTION OF THE INVENTION

The present invention relates to an electrochromic device (ECD) which has a structure of five types of layers: substrate, electronic conductor, primary electrochromic layer, and complementary ion conductor layer (a reservoir of ions and/or complementary electrochromic). The invention further contemplates the use of such device.

The electrochromic device displays a certain color depending on the combination of colors seen through the layers. There are two main colors (green and yellow) observed in the device if it has no dye or dye has yellow color. The green color of the device is the result of subtractive color mixing of electrochromic material which changes from blue to clear or transparent to blue and the yellow color from the dyed electrolyte layer. According to the potential applied independently to the electrochromic device, the observed color changes from dark green, whereas the electrochromic material remains blue to yellow, when the electrochromic material becomes transparent. Other colors can be observed if color dyes used are other than yellow.

Thus, the present invention has preferably an electrochromic device with the green color modulation to yellow by color subtraction method using the film of Prussian blue (PB) or WO3 to obtain blue color, and the electrolyte in membrane form containing LiI/I2, with yellow color. Furthermore, it is also described a possible method of obtaining the device.

The present invention contemplates two types of application of the electrochromic device where the first type consists of a single pixel, as part of many pixels, and the second type is a single device such as electrochromic window.

### BRIEF DESCRIPTION OF DRAWINGS

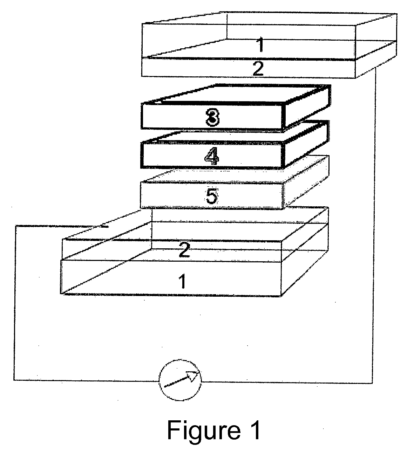

Figure 1 is a graphical representation of the layers of the electrochromic device.

### DETAILED DESCRIPTION OF THE INVENTION

The present invention relates to an electrochromic device (ECD) comprising a structure with five types of layers: two substrate layers (1), one to two electronic conductor layers (2) a primary electrochromic layer (3) film of Prussian blue (PB) or WO3, an ion conductor (4) containing poly(vinyl butyrate) (PVB)-LiI-I2 and a supplementary layer (5) CeO2-TiO2 ions storage and/or electrochromic complementary electrochromic film WO3 or PB.

The electronic device has two conductor layers (1), when no substrate layer (1) is metal or an electronic conductor layer (2), when one of the substrate layers (1) is metallic electronic conductor.

The layers are preferably arranged as follows, as shown in figure 1, from top to bottom: a substrate layer (1) of glass or electronic conductor polymer or metal; one electronic conductor layer (CE) (2) The substrate (1) is non-metallic; a primary electrochromic layer (3) film PB or WO3 film; an ion conductor (4) containing PVB-LiI-I2; a supplementary layer (5) CeO2-TiO2 ions storage and/or complementary electrochromic film of WO3 or PB; one electronic conductor layer (CE) (2), and a substrate layer (1) of glass or polymer.

Thus, the preferred settings of the electrochromic device are: [glass or polymer/CE/PB/electrolyte/CeO2-TiO2/CE/glass or polymer], or [glass or polymer/CE/WO3/electrolyte/CeO2-TiO2/CE/glass or polymer], or [glass or polymer/CE/WO3/electrolyte/PB/CE/glass or polymer] or [metal/WO3/electrolyte/CeO2-TiO2/CE/glass or polymer] or [metal/PB/electrolyte/CeO2-TiO2/CE/glass or polymer] or [metal/WO3/electrolyte/PB/CE/glass or polymer] or [metal/PB/electrolyte/WO3/CE/glass or polymer].

Between the upper layers (glass/CE, or polymer/CE or metal) and lower (CE/glass or CE/polymer), that is, between the substrate layer (1) of glass or polymer, coupled with the electronic conductor layer (CE) (2) and the other layers, or between the substrate layer (1) of metal and other layers there is a space that ranges from 0.001 cm to 1.5 cm, as can be seen in figure 1.

The device may further comprise a layer consisting of conductive member, such as a copper conductive tape for the realization of electrical contact with the electronic conductor layer (2) ITO (Tin oxide doped with Indium) at both ends of the electrochromic device.

The substrate (1) transparent or not transparent: The substrates (1) may be glass, polymer (preferably poly(ethylene terephthalate) - PET) or metal electronic conductor, and can be rigid or flexible. The two substrates (1) are used in transmissive mode or one of the two, the lower substrate can be used as non-transparent to work in reflection mode, resulting in the intensification of the reflected color of this surface.

The electronic conductor layer (2) may be transparent pair of electrodes separated from Tin oxide doped with Indium (called ITO); Tin oxide doped with Antimony (ATO) or Tin oxide doped with Fluorine (FTO). When the voltage is applied between the two electrodes of the electronic conductor layer (2) a current flows through subsequent layers promoting the color change of the electrochromic device from yellow to green or vice versa, or between other colors (if there is a dye in the ion conductor layer (4)). The voltage can be controlled, for example, by a potentiometer, and may be generated, for example, by a source of current or electrical potential as outlet, or a battery.

The primary electrochromic layer (3) and the complementary electrochromic layer (5) may be established as Prussian blue electrochromic material (PB), which changes from transparent to blue in anodic process, and from blue to transparent at the cathodic process, or in a transparent electrochromic material such as thin film of WO3, which changed from transparent to blue, cathodic process, and from blue to transparent in anodic process.

Depending on the construction of the device, i.e., of the type of electrochromic layer (3)that change the color in cathodic or anodic reaction, a permanent color, for example, the device color as mounted can be, or yellow (when the electrochromic layer (3) is a WO3 film), or green (when the electrochromic layer (3) is PB film) or other color, if there is a dye in ion conductor layer (4).

The electrochromic device, to obtain the desired coloration, needs of a potential application, which can be turned off after the color is obtained, resulting in memory time or color retention and/or its slow return to a state of permanent color (discoloration).

The yellow ion conductor (4) containing LiI/I2 may be liquid, gel, polymer or solid including natural macromolecules or other electrolytes with ionic liquids or carbon nanotubes, and may or may not contain natural or synthetic coloring agents, which in addition to modify or intensify a color tones of the electrochromic device allows it to achieve colors other than green and yellow. The yellow ion conductor (4) may have various intensities of yellow or other colors according to the presence of dyes and according to the percentage of 20:1 to 1:1 wt/wt of LiI/I2 used, resulting however, for example, in green color obtained by subtracting the blue color obtained with the main electrochromic layer (3).

The electrochromic device for the enhanced color, may have a complementary electrochromic layer (5) of Prussian blue (PB) as a counter electrode and/or CeO2-TiO2 ions reservoir undergoing a color change in the cathodic/anodic process opposite to the main electrochromic layer (3). If the main electrochromic layer changes color in the cathodic process, then, the supplementary/secondary electrochromic layer changes color in the anodic process, which means that the two layers colors at the same time causing an intensification of color. For example, the WO3 layer as a main electrochromic layer and Prussian blue, as a complementary electrochromic layer, change the color between transparent and blue at the same time, since Prussian blue (PB) changes from transparent color to blue in the anodic process, the thin film of WO3 changes from transparent to blue, in cathodic process.

The color of the electrochromic device varies according to the combination of colors seen through the layers. There are two primary colors observed in the device if there is no dye in the ion conductor layer (4) or if the dye is yellow: green and yellow. The green color of the device is the result of subtractive color mixing of electrochromic material (3) Prussian blue (PB), which changes from blue to transparent or WO3 that changes from transparent to blue and the yellow color from dyed or undyed electrolyte layer. According to the potential applied independently to the electrochromic device, the observed color changes from dark green, whereas the electrochromic material remains blue to yellow when the electrochromic material becomes transparent. Color intensity also varies according to the applied potential.

Changes in color of ion conductor (4) and/or the main electrochromic layer (3) and/or the ion storage layer and/or complementary electrochromic (5) may result in subtraction of different colors, resulting in different shades of green and yellow.

The present invention contemplates two types of electrochromic devices, the first type being composed of a single pixel, as part of many pixels, and the second type is a single device such as electrochromic window.

The electrochromic device may be used for camouflage and/or other applications, when the color modulation is desired, for example, on transparent surfaces of buildings, and/or vehicles, and/or aircraft, or reflective surfaces such as displays.

### Operation of this Invention

The electrochromic device with color change in real time for camouflage application was developed using the subtractive method of mixing two colors.

The device preferably has two principal colors: green and yellow, if no dye or yellow dye is present in the ion conductor layer (4); in this case, the green color observed is the result of the subtractive mixture of colors from electrochromic materials that have or acquire a blue color and a yellow, permanent colored electrolyte with or without the yellow dye (in the ion conductor layer (4)). Depending on the applied potential to the device the change of coloring from or to yellow occurs when the electrochromic layer (3) is transparent, and the dark green coloration when the electrochromic material is or acquires the blue color (eg. the thin film WO3 is transparent and passes into the blue on cathodic process, the thin film PB is blue and goes to transparent at the cathodic process). Other colors may be obtained if different from the yellow dyes are used in ion conductor layer (4).

For this invention was used the film of Prussian blue (PB) or as WO3 electrochromic layer (3) for the blue color and yellow layer was as used with LiI/I2 dissolved in polymer electrolyte membrane. As a result, of mixing the two colors a green color was observed. As mentioned above, when using colored dye other than yellow in the ion conductor layer (4), the electrochromic device could have different of green and yellow color modulation.

### Examples of Implementation of the Invention

Table 1 shows the reflectance values at different wavelengths of electrochromic device with glass/ITO/PB/PVB-LiI-I2/CeO2-TiO2/ITO/glass configuration after application of different potentials between 2.0 V and -2,0 V and 0.5 V interval. This table reveals the range of color change of device after application of different potentials between -2.0 V and 2.0 V.

**Table 1. Values of reflectance at different wavelengths (λ) of electrochromic device with glass/ITO/PB/PVB-LiI-I2/CeO2-TiO2/ITO/glass configuration after application of different potentials between 2.0 V and - 2.0 V and 0.5 V interval.**

| **λ(nm)** | **Applied potential** (**Volt**) | | | | | | | | |
|---|---|---|---|---|---|---|---|---|---|
| | **-2** | **-1,5** | **-1** | **-0,5** | **0** | **0,5** | **1** | **1,5** | **2** |
| **400** | 0.40 | 0.40 | 0.40 | 0.41 | 0.40 | 0.39 | 0.40 | 0.40 | 0.40 |
| **420** | 0.38 | 0.38 | 0.38 | 0.38 | 0.38 | 0.38 | 0.38 | 0.38 | 0.38 |
| **440** | 0.47 | 0.47 | 0.47 | 0.46 | 0.46 | 0.47 | 0.47 | 0.46 | 0.45 |
| **460** | 2.62 | 2.59 | 2.60 | 2.50 | 2.42 | 2.46 | 2.40 | 2.20 | 2.13 |
| **480** | 14.27 | 13.77 | 13.65 | 13.31 | 12.71 | 12.16 | 11.42 | 10.60 | 10.54 |
| **500** | 32.41 | 30.57 | 30.11 | 29.49 | 27.80 | 25.37 | 23.25 | 21.44 | 21.83 |
| **520** | 41.77 | 38.61 | 37.85 | 36.98 | 34.30 | 30.32 | 27.13 | 24.64 | 25.28 |
| **540** | 45.27 | 41.17 | 40.22 | 39.04 | 35.55 | 30.48 | 26.56 | 23.40 | 24.01 |
| **560** | 48.18 | 43.19 | 42.18 | 40.58 | 36.15 | 30.11 | 25.47 | 21.47 | 21.98 |
| **580** | 51.66 | 45.89 | 44.77 | 42.63 | 37.18 | 30.04 | 24.52 | 19.53 | 19.80 |
| **600** | 54.98 | 48.51 | 47.37 | 44.68 | 38.20 | 29.93 | 23.50 | 17.59 | 17.65 |
| **620** | 57.96 | 50.97 | 49.86 | 46.66 | 39.05 | 29.75 | 22.52 | 15.78 | 15.59 |
| **640** | 60.48 | 53.25 | 52.20 | 48.45 | 39.77 | 29.51 | 21.62 | 14.24 | 13.87 |
| **660** | 62.79 | 55.41 | 54.50 | 50.23 | 40.47 | 29.35 | 20.88 | 13.10 | 12.61 |
| **680** | 64.70 | 57.37 | 56.63 | 51.78 | 41.09 | 29.21 | 20.42 | 12.36 | 11.80 |
| **700** | 66.26 | 59.15 | 58.56 | 53.29 | 41.74 | 29.21 | 20.28 | 12.12 | 11.50 |
| **720** | 67.25 | 60.52 | 60.04 | 54.59 | 42.25 | 29.33 | 20.42 | 12.28 | 11.60 |
| **740** | 68.21 | 61.90 | 61.52 | 55.91 | 43.02 | 29.81 | 21.00 | 12.83 | 12.17 |
| **760** | 68.66 | 63.02 | 62.82 | 57.15 | 43.95 | 30.47 | 21.87 | 13.70 | 13.02 |
| **780** | 69.29 | 64.23 | 63.89 | 58.52 | 45.03 | 31.54 | 23.19 | 14.98 | 14.30 |
| **800** | 69.70 | 65.21 | 65.00 | 59.76 | 46.44 | 32.84 | 24.83 | 16.51 | 15.80 |

The evidence of the color change can be confirmed by analyzing the table 2, which shows average values of the color parameters of the CIE LAB system L*a*b* obtained from data of the table 1 of electrochromic device with glass/ITO/PB/PVB-LiI-I2/CeO2-TiO2/ITO/glass configuration for different applied potentials between 2.0 V and -2.0 V and 0.5 V interval. In this table one can observe that the application of different potential promotes a change of the color parameters L*, a* and b* showing the color change of the device.

**Table 2. Mean values of L*a*b* electrochromic device for setting glass/ITO/PB/PVB-LiI-I2/CeO2-TiO2/ITO/glass for different applied potentials between 2.0 V and -2.0 V and 0.5 V interval.**

| | **Applied potential (Volt)** | | | | | | | | |
|---|---|---|---|---|---|---|---|---|---|
| | **2.0** | **1.5** | **1.0** | **0.5** | **0** | **-0.5** | **-1.0** | **-1.5** | **-2.0** |
| **L*** | 52.96 | 52.30 | 56.72 | 60.37 | 65.96 | 67.53 | 70.07 | 71.43 | 73.59 |
| **a*** | -3.96 | -2.90 | -7.10 | -3.82 | -9.68 | -7.00 | -4.93 | -3.92 | -2.89 |
| **b*** | 49.12 | 48.05 | 53.74 | 58.70 | 66.32 | 68.58 | 72.04 | 73.98 | 76.65 |

Table 3 shows the slow change of yellow color of the electrochromic device with glass/ITO/PB/PVB-LiI-I2/CeO2-TiO2/ITO/glass configuration in order to achieve permanent green color after the voltage application -2,0 V for 15 seconds and its shutdown (measured in open circuit). The data shown in table 3 show that the discoloration of the electrochromic device is 4% at 7200 seconds of device being in open circuit, that is, without the potential application the device shows a good memory.

**Table 3. Values of reflectance versus time for electrochromic device with glass/ITO/PB/PVB-LiI-I2/CeO2-TiO2/ITO/glass configuration in open circuit after application of -2.0 V for 15 seconds.**

| Time (seconds) | Reflectance (% at 550 nm) |
|---|---|
| 0 | 36.60 |
| 4 | 36.56 |
| 12 | 36.58 |
| 20 | 36.53 |
| 52 | 36.50 |
| 100 | 36.36 |
| 200 | 36.18 |
| 300 | 36.04 |
| 400 | 35.89 |
| 500 | 35.81 |
| 600 | 35.71 |
| 700 | 35.67 |
| 800 | 35.58 |
| 900 | 35.47 |
| 1000 | 35.38 |
| 2000 | 34.79 |
| 3000 | 34.23 |
| 4000 | 33.73 |
| 5000 | 33.35 |
| 6000 | 33.01 |
| 7000 | 32.73 |
| 7200 | 32.66 |

### Example of Process of Electrochromic Device Preparation

PB films were deposited electrochemically in an electrochemical cell of 50 mL. The solution was composed of 5 ml HCl (0.05 M), 10 mL of K3[Fe(CN)6] (0.05 M), and 10 mL of FeCl36H2O (0.05 M). As a working electrode was used glass/ITO, as a counter electrode was used platinum plate, and as the reference electrode was used Ag/AgCl. The deposition was performed galvanostatically at a current density of 40 uA/cm² applied for 300 s. After deposition, the film of blue colored Prussian blue was washed with Milli-Q water and air dried. The electrodeposition was conducted with potentiostat/galvanostat Autolab 302N brand.

The electrolyte was obtained by mixing 1.0 g of PVB (poly(vinyl butyrate), Butvar B-98) with 20 ml of propanone with a magnetic stirrer at 50°C until complete dissolution. Next, was added to this mixture 10:1 or 5:1 w/w LiI/I2 (for different intensities of yellow) and stirring was continued for another 2 hours. At the end, the solution was dispersed in a Petri dish and dried at 40°C, resulting in yellow membrane with thickness of 72-80 µm, which was stored in a desiccator for protection against humidity.

The electrochromic devices, with effective area of two cm², and with glass /ITO/PB/electrolyte/CeO2-TiO2/ITO/glass configuration were obtained by the assembly of two pieces of glass/ITO (Delta Technologies) coated one with PB and other with CeO2-TiO2. The CeO2-TiO2 films were obtained by sol-gel and deposited by dip-coating technique, with removal rate of 20 cm/min and densified at 450°C for 15 min. Electrolytes in the form of membranes were placed on layers of PB/ITO/glass. One centimeter of free space at the ends of glass substrate/ITO was left to the electrical contact. Then, the CeO2-TiO2/ITO/glass was pressed over the membrane electrolyte in such a way that PB film was facing the CeO2-TiO2 film separated from the electrolyte membrane (as shown in Figure 1). Finally, a a Copper conductive tape (Cu-conducting tape; 3M) of one centimeter wide was stuck on the two ends of parts one and two to make electrical contact.

The electrochromic devices were characterized by chronoamperometry with potentiostat/galvanostat 302 N Autolab by applying potentials between -2.0 and 2.0 V for 15 s. The UV-vis spectroscopy was performed with a Shimadzu UV 2550 spectrophotometer in the range of 400 to 800 nm in the reflectance mode and Jasco V-670 in the range of 200 to 800 nm.

Although the preferred version of the invention has been illustrated and described, it should be understood that the same is not limited. Various modifications, changes, variations, substitutions and equivalents will occur without deviating from the scope of the invention.

## Claims

1. Electrochromic Device Applied as Electrochromic Window or Pixel **characterized** that it comprises a structure with five types of layers: two substrate layers (1), one to two electronic conductor layers (2), a primary electrochromic layer (3) the Prussian blue film (PB) or WO3, an ion conductor (4) containing PVB-LiI-I2, and a supplementary layer (5) CeO2-TiO2 ions storage, and/or complementary electrochromic film WO3 or PB.

2. Electrochromic Device Applied as Electrochromic Window or Pixel **characterized** that it has two electronic conductor layers (1) when the substrate layer (1) is of glass or electronic conducting polymer, or a layer (2) when one of layered substrate (1) is metallic electronic conductor.

3. Device according to claims 1 and 2, **characterized in that** the layers are arranged as follows, from top to bottom: a substrate layer (1) of glass or electronic conducting polymer or metal; a conductor layer (CE) (2) and the substrate (1) non-metallic; a primary electrochromic layer (3) PB or WO3 film; an ion conductor (4) containing PVB-LiI-I2; a supplementary layer (5) of CeO2-TiO2 as ions storage and/or complementary electrochromic film of WO3 or PB; one electronic conductor layer (CE) (2) and a substrate layer (1) of glass or polymer.

4. Device according to claim 3, **characterized in that** the electrochromic device configurations are: [glass or polymer/CE/PB/electrolyte/TiO2-CeO2/CE/glass or polymer], or [glass or polymer/CE/WO3/electrolyte/CeO2-TiO2/CE/glass or polymer], or [glass or polymer/CE/WO3/electrolyte/PB/CE/glass or polymer] or [metal/WO3/electrolyte/CeO2-TiO2/CE/glass or polymer] or [metal/PB/electrolyte/CeO2-TiO2/CE/glass or polymer] or [metal/WO3/electrolyte/PB/CE/glass or polymer] or [metal/PB/electrolyte/WO3/CE/glass or polymer].

5. Device according to claim 4, **characterized** that exist, between the layers of substrate layer (1) of glass added to the electronic conductor layers (2) and the other layers, a space of between 0.001 cm and 1.5 cm.

6. Device according to claim 2, **characterized in that** it contains a layer, consisting of conductive electrical contact with ITO (tin oxide doped with indium oxide) or ATO (tin oxide doped with antimony oxide) or FTO (tin oxide doped with fluor) on both extremities of the device.

7. Device according to claim 5, **characterized in that** the conductor element is a conductive copper tape.

8. Device according to claim 1, **characterized in that** the substrates (1) are of transparent or non-transparent glass, polymer or conductive metal, rigid or flexible.

9. Device according to claim 8, **characterized in that** the polymer substrate (1) is preferably PET (poly(ethylene terephthalate)).

10. Device according to claim 8, **characterized in that** the two substrates (1) are used in the transmissive mode or one of two, the lowest one, be used as non-transparent in reflection mode.

11. Device according to claim 1, **characterized by** the fact that the layer(s) of electronic conductor (2) is/are ITO (tin oxide doped with indium oxide) or ATO (tin oxide doped with antimony) or FTO (tin oxide doped with fluorine).

12. Device according to claim 11, **characterized by** the fact that the voltage is applied between two electrodes of the electronic conductor layer (2).

13. Device according to claim 12, **characterized in that** the current passage promotes the change of color of the electrochromic device.

14. Device according to claim 13, **characterized in that** the voltage is controlled by a potentiometer and is generated by a source of current or electrical potential.

15. Device according to claim 14, **characterized in that** the current source is a power source, battery or cell.

16. Device according to claim 1, **characterized in that** the electrochromic layer (3) consists of electrochromic material Prussian blue (PB) or electrochromic material WO3 thin film.

17. Device according to claim 1, **characterized by** the fact that ion conductor (4) comprises LiI/I2 and is liquid, gel, solid or polymer, including natural macromolecules or other electrolytes with ionic liquids or carbon nanotubes.

18. Device according to claim 17, **characterized by** the fact that ion conductor (4) still contains natural or synthetic dyes.

19. Device according to claims 17 or 18, **characterized in that** the intensity of color of the electrochromic device varies according to the presence or absence of dye and the percentage ranging from 20:1 to 1:1 wt/wt of LiI/I2 used.

20. Device according to claim 1, **characterized in that** the complementary electrochromic layer (5) Prussian blue (PB) as a counter electrode and/or CeO2-TiO2 ions storage undergo color change in cathodic/anode process opposite to the main electrochromic layer (3).

21. Device according to claim 1, **characterized in that** the color of the electrochromic device varies according to the subtraction of colors seen through the ion conductor layer (4) and/or the main electrochromic layer (3), and/or the additional layer (5), and/or according to the applied potential.

22. Use of Electrochromic Device Applied as Electrochromic Window or Pixel **characterized in that** be in transparent surfaces of buildings, and/or vehicles, and/or airplanes, and/or reflex surfaces.

23. Use according to claim 22, **characterized by** being for camouflage.

24. Use according to claim 22, **characterized by** being in displays.
